# EUROPEAN PATENT SPECIFICATION

(11) **EP 0 969 907 B1**
(45) Date of publication and mention of the grant of the patent: **22.10.2003**
(21) Application number: 98909488.3
(22) Date of filing: 02.03.1998
(51) Int. Cl.: B01D 1/02, B01D 1/28

(54) **DEVICE FOR RECOVERING AND SEPARATING IMPURITIES FROM THE COOLING FLUID OF A CONDITIONING SYSTEM**
VORRICHTUNG ZUR RÜCKGEWINNUNG UND TRENNUNG VON VERUNREINIGUNGEN AUS DER KÜHLFLÜSSIGKEIT EINER KONDITIONIERUNGSANLAGE
DISPOSITIF DE RECUPERATION ET DE SEPARATION DES IMPURETES D'UN FLUIDE DE REFROIDISSEMENT D'UN SYSTEME DE CONDITIONNEMENT

(30) Priority: 28.02.1997 IT FI970035
(43) Date of publication of application: 12.01.2000
(73) Proprietor: North European Patents and Investments H.S.A., 1724 Luxembourg (LU)
(72) Inventor: RENDERS, Marie, Joseph, B-1651 Beersel (BE)
(74) Representative: Celestino, Marco
(86) International application number: PCT/EP98/01148
(87) International publication number: WO 98/037936

(56) References cited:
- DE-A- 3 617 314
- DE-C- 588 213
- US-A- 2 762 429
- US-A- 2 834 409

## Description

### Field of the invention

The present invention relates to a device for recovering and separating from impurities the cooling fluid of air conditioning systems, especially but not exclusively for motor vehicles.

### Background of the invention

It is well known that the maintenance of an air conditioning system provides periodically emptying the system and recovering the cooling fluid. The latter needs in particular to be freed of impurities, that are created during the system operation, especially oil and vapour. In the prior art, devices are also known for the cooling fluid recovery and for its separation from impurities, which comprise:
- a container, having a top and a bottom part,
- an inlet for the fluid/impurities mixture and an outlet for the fluid provided at the top portion,
- an outlet for impurities provided at the bottom part,
- heating means arranged within the container to vaporise the cooling fluid, for separating it from the solid impurities and from the liquid impurities having higher boiling point,
- a first duct comprising a compressor for drawing the fluid from the outlet and for feeding, at a higher temperature, the heating means,
- a second duct for transferring the fluid from the heating means to a collection tank external to the container.

The heating means comprise a copper coil within the container, dipped in the fluid/impurities mixture that comes, mostly in liquid phase, from the conditioning system. Owing to the coil heating action, the cooling fluid evaporates separating itself from the impurities, which have higher vaporisation temperature. The fluid exits the container and is conveyed, by means of the first duct, which is provided with a compressor, into the coil located within the container itself. The action of the compressor determines a rise in the temperature of the fluid, inside the coil, with the subsequent heating effect in the container.

With the progressive evaporation of the cooling fluid the liquid phase of the fluid/impurities mixture is enriched in oil and impurities. Therefore, in order to obtain the total evaporation of the cooling fluid, the mixture must be in direct contact with the coil as well as an adequate heat exchange surface area is required. Hence, the coil cannot suffice to cause the evaporation of the entire liquid phase of the fluid.

To overcome this drawback the proposal has been advanced, among others, of heating means in the form of two coils arranged in series, coaxial and positioned one outside the other. However, this solution is not fully satisfactory because, when the level of liquid mixture in the container is very low, the exchange surface is not sufficient to determine a complete and rapid evaporation of the cooling fluid. This entails, in practical use, an undesired permanence of a certain quantity of cooling fluid, highly polluting, amongst the impurities which are expelled at the end of the process.

DE-A-3617314 discloses an apparatus for distilling contaminated solvents and solvent mixtures, in particular contaminated solvents of dry-cleaning facilities. The apparatus comprises a container, an inlet for the fluid with impurities and an outlet for the purified fluid, located at the upper part of the container. It comprises also an impurities outlet at the lower part and heating means to vaporize the fluid. However, this document does not relate to air conditioning circuits and does not suggest a complete and rapid separation of a refrigerant from impurities. Moreover, when the level of liquid mixture in the container is very low, the exchange surface is not sufficient to determine a complete and rapid evaporation of the cooling fluid.

### Summary of the invention

Therefore, a main object of the present invention is to provide a device for the recovery of the cooling fluid wherein the separation from impurities occurs completely and very rapidly.

Another object of the present invention is to provide a method for the recovery of the cooling fluid that overcomes the above drawbacks and that can be carried out by said device.

Said main object is attained by means of a device, of the type described above, wherein according to the invention a portion of the container, adjacent to the base thereof, is enclosed by walls made of good heat conducting material and is part of the heating means. In particular said portion of the container is advantageously enclosed in at least one hollow body - preferably of cylindrical shape -communicating with at least one coil and fitted with an inlet for the entrance of the compressed fluid from the first duct.

A device in accordance with the invention yields multiple advantages. Firstly, the presence of the a heating portion adjacent to the base, such as in particular a cylindrical hollow body, causes the liquid to be in any case in contact with a sufficient exchange surface. For instance, since this surface is on the bottom of the container, it can exchange heat even when a thin layer of liquid is present, so that all the liquid can evaporate.

Secondly, the time required for complete evaporation is considerably reduced since, other parameters being equal, during the final phase the global heat exchange rate changes not much, because the liquid always remains in contact with the cylindrical body and therefore the flow rate of processed fluid varies only slightly.

Thirdly, all the cooling fluid evaporates and is recovered without being released into the environment.

According to another aspect of the present invention, a method for recovering and separating from impurities the cooling fluid of a conditioning system, comprises the steps of:
- drawing a fluid/impurities mixture into a container having a lower and an upper part, an inlet for the fluid/impurities mixture and an outlet for the purified fluid provided in the upper part, and an outlet for impurities provided in the lower part,
- heating by heating means the fluid/impurities mixture in the container for vaporising the cooling fluid and for separating it from solid impurities and from liquid impurities having higher boiling point,
- drawing the vaporised purified fluid from the container through the outlet in the upper part, compressing and overheating it,
- conveying the overheated fluid through the heating means in the container for carrying out the heating step,
- transferring the fluid from the heating means to a collection tank external to the container,
**characterised in that** the heating step is carried out in the lower part of the container by conveying the overheated fluid through a volume portion of the container defined by a heating surface secured on a lower base (11) of said container and having walls made of heat conducting material.

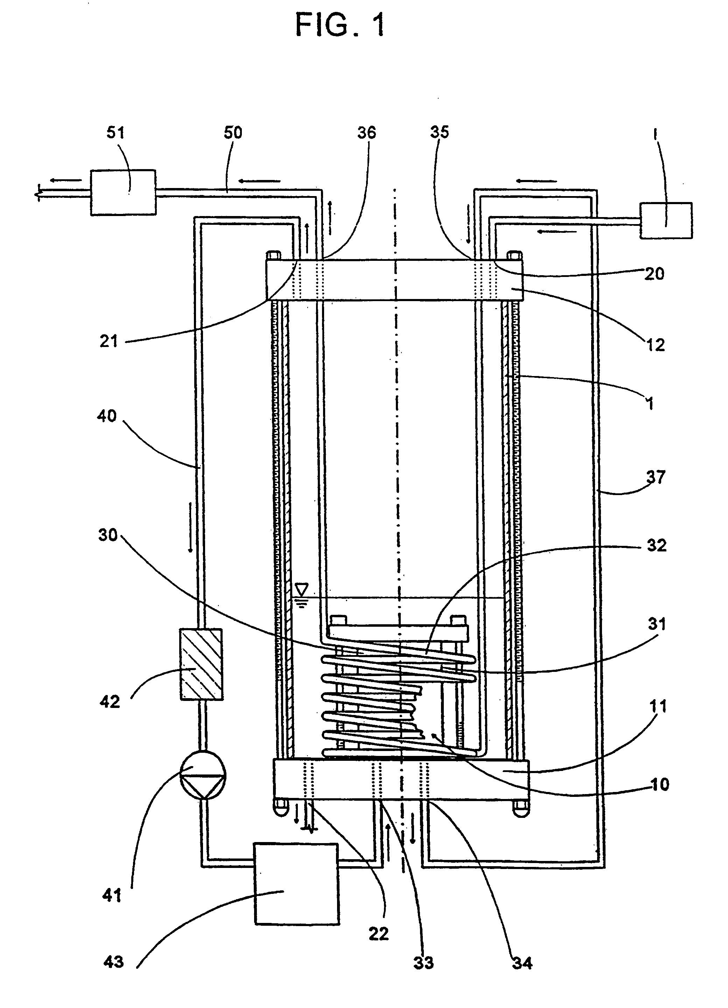

### Brief description of the drawing

These and additional advantages and characteristics of the invention shall be made more evident in the detailed description that follows, made with reference to the accompanying drawing, provided purely by way of a non limiting example, which schematically shows a device for recovering and separating impurities from the cooling fluid of a conditioning system.

### Description of a preferred embodiment

With reference to the enclosed figure, a device according to the invention essentially comprises:
- a container 1, preferably of cylindrical shape, having an upper base 12 with an upper inlet 20 for the fluid/impurities mixture and an upper outlet 21 for the fluid; and having a lower base 11 with a lower outlet 22 for impurities;
- a coil 32, arranged in the container 1 and having an inlet 35 and an outlet 36, respectively to/from the container, through upper base 12;
- a metal cylinder 30 secured on lower base 11, having walls 31 defining an inner volume 10 closed at the top, having an inlet 33 and an outlet 34 through lower base 11;
- a first duct 40, comprising a filter 42, a compressor 41 and an oil separator 43, connecting upper outlet 21 to inlet 33;
- a second duct 50, comprising a condenser 51, connecting outlet 36 of coil 32 to an external collection tank (not shown);
- a third duct 37, which connects outlet 34 of inner cylinder 30 an inlet 35 of coil 32.

Advantageously, there is a free volume between inner cylinder 30 and cylindrical container 1. Moreover the inner cylinder 30 is coaxial to coil 32, which develops around it, and both are coaxial to the container 1.

Operation is as follows. From the conditioning system 1 the cooling fluid/impurities mixture, mostly in liquid phase, is drawn into container 1 through inlet 20. As described hereinafter coil 32 and cylinder 30 act as heating means in container 1, so that the cooling fluid vaporizes leaving any solid impurities and liquid impurities having higher boiling point in container 1 same. Such impurities are eventually extracted from container 1 through lower outlet 22. The vaporised cooling fluid is then conveyed, through upper outlet 21, into first duct 40 and compressed in compressor 41, with consequent overheating. Downstream oil separator 43 the fluid, compressed and overheated, is put into container 1 and, more specifically, into metal cylinder 30 through inlet 33. The fluid then exits cylinder 30 and, through third duct 37, is conveyed to coil 32, through inlet 35.

After passing through coil 32, the fluid exits container 1, through outlet 36 and, through second duct 50 and condenser 51, is conveyed to the collection tank. The metal walls 31 of inner cylinder 30, and coil 32, owing to the compressed and overheated fluid passing therethrough, serve as heating means, for evaporation and separation of the fluid from the impurities.

Therefore, with the present invention, the liquid fluid/impurities mixture is always in contact with a heat exchange surface, i.e. walls 31 of cylinder 30, even when the level of liquid is very low. This offers the advantage, with respect to prior art devices, of a complete and rapid evaporation of the cooling fluid, without any part thereof remaining within the impurities, thus avoiding any hazard of release into the environment.

The invention thus conceived can be subject to numerous modifications and variations, without thereby departing from the scope of the claims.

## Claims

1. A device for recovering and separating from impurities the cooling fluid of a conditioning system, comprising:
- a container (1), having a lower and an upper base;
- an inlet (20) for the fluid/impurities mixture and an outlet (21) for the purified fluid provided in said upper base,
- an outlet (22) for impurities provided in said lower base,
- heating means provided in said container to vaporise the cooling fluid separating it from solid impurities and from liquid impurities having higher boiling point,
- a first duct (40), comprising a compressor (41), for drawing said purified fluid from said outlet (21) and for feeding said heating means at a higher temperature owing to overheating through said compressor,
- a second duct (50) for transferring the fluid from said heating means to a collection tank external to said container,
**characterised in that** said heating means comprises a heating surface (30) secured on the lower base (11), said heating surface (30) comprising walls (31) made of heat conducting material and defining a volume portion (10) of said container (1).

2. Device according to claim 1, **characterised in that** said volume portion (10) of said container (1) defined by said heating surface (30) has an inlet (33) for the insertion from said first duct (40) of the compressed fluid and an outlet (34) communicating with at least one coil (32).

3. Device according to claim 2, **characterised in that** said volume portion (10) of said container (1) defined by said heating surface (30) has an outlet (34) communicating with said at least one coil (32) by means of a third duct (37).

4. Device according to claim 2 or 3, **characterised in that** said heating surface (30) is a hollow body (30) of cylindrical shape.

5. Device according to claim 4, **characterised in that** said container (1) is of cylindrical shape and **in that** the base diameter of said cylindrical hollow body (30) is smaller than that of the cylindrical container (1), said cylindrical hollow body (30) being coaxial to said coil (32), which develops around it, and both being coaxial to said cylindrical container (1).

6. Device according to one of the previous claims, **characterised in that** said first duct (40) comprises a filter (42) and an oil separator (43) respectively upstream and downstream of said compressor (41) and **in that** said second duct (50) comprises a condenser (51) of the fluid.

7. A method for recovering and separating from impurities the cooling fluid of a conditioning system, comprising the steps of:
- drawing a fluid/impurities mixture into a container (1), having a lower and an upper part, an inlet (20) for the fluid/impurities mixture and an outlet (21) for the purified fluid provided in said upper part, and an outlet (22) for impurities provided in said lower part,
- heating by heating means said fluid/impurities mixture for vaporising said cooling fluid and for separating it from solid impurities and from liquid impurities having higher boiling point,
- drawing said vaporised purified fluid from said container (1) through said outlet (21) in said upper part, compressing and overheating it,
- conveying said overheated fluid through said heating means in said container for carrying out said heating step,
- transferring said fluid from said heating means to a collection tank external to said container (1),
**characterised in that** said heating step is carried out in said lower part of said container by conveying said overheated fluid through a volume portion (10) of said container defined by a heating surface (30) secured on a lower base (11) of said container and (31) made of heat conducting material having walls.

## Patentansprüche

1. Vorrichtung zum Rückgewinnen und Abtrennen des Kühlfluids einer Klimaanlage von Unreinheiten, umfassend:
- einen Behälter (1) mit einer unteren und einer oberen Platte,
- einen Einlass (20) für die Fluid/Unreinheiten-Mischung und einen Auslass (21) für das gereinigte Fluid, die in der oberen Platte bereitgestellt sind,
- einen Auslass (22) für Unreinheiten, der in der unteren Platte bereitgestellt ist,
- ein Heizmittel, das in dem Behälter zum Verdampfen des Kühlfluids bereitgestellt ist, so dass dieses von festen Unreinheiten und von flüssigen Unreinheiten mit höherem Siedepunkt getrennt wird,
- einen ersten Kanal (40), umfassend einen Kompressor (41) zum Abziehen des gereinigten Fluids von dem Auslass (21) und zum Speisen des Heizmittels bei einer höheren Temperatur auf Grund einer Überhitzung durch den Kompressor,
- einen zweiten Kanal (50) zum Überführen des Fluids von dem Heizmittel zu einem Sammeltank außerhalb des Behälters,
**dadurch gekennzeichnet, dass** das Heizmittel eine Heizfläche (30) umfasst, die an der unteren Platte (11) gesichert ist, wobei die Heizfläche (30) Wände (31) aus wärmeleitendem Material umfasst und ein Teilvolumen (10) des Behälters (1) definiert.

2. Vorrichtung nach Anspruch 1, **dadurch gekennzeichnet, dass** das Teilvolumen (10) des Behälters (1), das durch die Heizfläche (30) definiert ist, einen Einlass (33) für das Einleiten des komprimierten Fluids von dem ersten Kanal (40) und einen Auslass (34), der mit wenigstens einer Wendel (32) in Verbindung steht, umfasst.

3. Vorrichtung nach Anspruch 2, **dadurch gekennzeichnet, dass** das Teilvolumen (10) des Behälters (1), das durch die Heizfläche (30) definiert ist, einen Auslass (34) aufweist, der durch einen dritten Kanal (37) mit der wenigstens einen Wendel (32) in Verbindung steht.

4. Vorrichtung nach Anspruch 2 oder 3, **dadurch gekennzeichnet, dass** die Heizfläche (30) ein Hohlkörper (30) von zylindrischer Form ist.

5. Vorrichtung nach Anspruch 4, **dadurch gekennzeichnet, dass** der Behälter (1) von zylindrischer Form ist und dass der Durchmesser der Basis des zylindrischen Hohlkörpers (30) kleiner als jener des zylindrischen Behälters (1) ist, wobei der zylindrische Hohlkörper (30) koaxial zu der Wendel (32) liegt, die um ihn herum verläuft, und beide koaxial zu dem zylindrischen Behälter (1) liegen.

6. Vorrichtung nach einem der vorangehenden Ansprüche, **dadurch gekennzeichnet, dass** der erste Kanal (40) ein Filter (42) und einen Ölabscheider (43) stromaufwärts beziehungsweise stromabwärts des Kompressors (41) umfasst und dass der zweite Kanal (50) einen Fluidkondensator (51) umfasst.

7. Verfahren zum Rückgewinnen und Abtrennen des Kühlfluids einer Klimaanlage von Unreinheiten, umfassend die folgenden Schritte:
- Abziehen einer Fluid/Unreinheiten-Mischung in einen Behälter (1) mit einem unteren und einem oberen Teil, wobei ein Einlass (20) für die Fluid/Unreinheiten-Mischung und ein Auslass (21) für das gereinigte Fluid in dem oberen Teil bereitgestellt sind, und ein Auslass (22) für Unreinheiten in dem unteren Teil bereitgestellt ist,
- Erwärmen der Fluid/Unreinheiten-Mischung in dem Behälter durch Heizmittel zum Verdampfen des Kühlfluids und zu dessen Abtrennung von festen Unreinheiten und von flüssigen Unreinheiten mit höherem Siedepunkt,
- Abziehen des verdampften, gereinigten Fluids aus dem Behälter (1) durch den Auslass (21) in dem oberen Teil, Komprimieren und Überhitzen desselben,
- Befördern des überhitzten Fluids durch das Heizmittel in dem Behälter zur Ausführung des Erwärmungsschrittes,
- Überführen des Fluids von dem Heizmittel zu einem Sammeltank außerhalb des Behälters (1),
**dadurch gekennzeichnet, dass** der Erwärmungsschritt in dem unteren Teil des Behälters durch Befördern des überhitzten Fluids durch ein Teilvolumen (10) des Behälters ausgeführt wird, das durch eine Heizfläche (30) definiert ist, die an einer unteren Platte (11) des Behälters gesichert ist und Wände (31) aus wärmeleitendem Material aufweist.

## Revendications

1. Dispositif de récupération et de séparation des impuretés d'un fluide de refroidissement de système de conditionnement comprenant :
- un récipient (1), comportant une base inférieure et une base supérieure ;
- un orifice d'admission (20) destiné au mélange fluide/impuretés et un orifice de sortie (21) destiné au fluide purifié ménagés dans ladite base supérieure ;
- un orifice d'évacuation (22) destiné aux impuretés ménagé dans ladite base inférieure,
- un moyen de chauffage ménagé dans ledit récipient pour vaporiser le fluide de refroidissement en le séparant des impuretés solides et des impuretés liquides ayant un point d'ébullition plus élevé,
- une première conduite (40), comprenant un compresseur (41), pour extraire ledit fluide purifié par ledit orifice de sortie (21) et pour alimenter ledit moyen de chauffage à une température supérieure grâce au surchauffage dû audit compresseur,
- une seconde conduite (50) destinée à transférer le fluide dudit moyen de chauffage vers un réservoir de collecte externe audit récipient,
**caractérisé en ce que** ledit moyen de chauffage comprend une surface chauffante (30) solidement fixé à la base inférieure (11), ladite surface chauffante (30) comprenant des parois (31) composées d'un matériau conducteur de la chaleur et définissant une partie volumique (10) dudit récipient (1).

2. Dispositif selon la revendication 1, **caractérisé en ce que** ladite partie volumique (10) dudit récipient (1) définie par ladite surface chauffante (30) comprend un orifice d'admission (33) destiné à l'insertion depuis ladite première conduite (40) du fluide compressé et un orifice de sortie (34) communicant avec au moins un serpentin (32).

3. Dispositif selon la revendication 2, **caractérisé en ce que** ladite partie volumique (10) dudit récipient (1) définie par ladite surface chauffante (30) comporte un orifice de sortie (34) communicant avec ledit au moins un serpentin (32) au moyen d'une troisième conduite (37).

4. Dispositif selon la revendication 2 ou 3, **caractérisé en ce que** ladite surface chauffante (30) est un corps creux (30) de forme cylindrique.

5. Dispositif selon la revendication 4, **caractérisé en ce que** ledit récipient (1) est de forme cylindrique et **en ce que** le diamètre de base dudit corps creux cylindrique (30) est plus petit que celui du récipient cylindrique (1), ledit corps creux cylindrique (30) étant coaxial audit serpentin (32), lequel se développe de manière à l'entourer, et tous deux étant coaxiaux audit récipient cylindrique (1).

6. Dispositif selon l'une des revendications précédentes, **caractérisé en ce que** ladite première conduite (40) comprend un filtre (42) et un séparateur d'huile (43) respectivement situés en aval et en amont dudit compresseur (41) et **en ce que** ladite seconde conduite (50) comprend un condenseur (51)du fluide.

7. Procédé de récupération et de séparation des impuretés du fluide de refroidissement d'un système de conditionnement, comprenant les étapes consistant à :
- extraire un mélange fluide/impuretés pour introduction dans un récipient (1), comportant une partie inférieure et une partie supérieure, un orifice d'admission (20) destiné au mélange fluide/impuretés et un orifice de sortie (21) destiné au fluide purifié ménagés dans ladite partie supérieure, et une sortie d'évacuation (22) destinée aux impuretés ménagée dans ladite partie inférieure,
- chauffer, par un moyen de chauffage, ledit mélange fluide/impuretés pour vaporiser ledit fluide de refroidissement et pour le séparer des impuretés solides et des impuretés liquides présentant un point d'ébullition plus élevé,
- extraire ledit fluide purifié vaporisé dudit récipient (1) à travers ledit orifice de sortie (21) ménagé dans ladite partie supérieure, le compresser, puis le surchauffer,
- acheminer ledit fluide surchauffé à travers ledit moyen de chauffage jusque dans ledit récipient pour conduire ladite étape de chauffage,
- transférer ledit fluide dudit moyen de chauffage à un réservoir de collecte externe audit récipient (1),
**caractérisé en ce que** ladite étape de chauffage est conduite dans ladite partie inférieure dudit récipient par l'acheminement dudit fluide surchauffé à travers une partie volumique (10) dudit récipient définie par une surface chauffante (30) solidement fixée sur une base inférieure (11) dudit récipient et comportant des parois (31) composées d'un matériau conducteur de la chaleur.
